# EUROPEAN PATENT APPLICATION

(11) **EP 2 073 435 A1**
(43) Date of publication of application: **24.06.2009**
(21) Application number: 08021186.5
(22) Date of filing: 05.12.2008
(51) Int. Cl.: H04L 12/10

(54) **Method and system for vehicular power distribution utilizing power over ethernet**

(30) Priority: 17.12.2007 US 14349 P; 21.08.2008 US 196142
(71) Applicant: Broadcom Corporation, Irvine CA 92617 (US)
(72) Inventor: Diab, Wael William, San Francisco, CA 94109 (US); Teener, Michael Johas, Santa Cruz, CA 95062 (US); Kim, Yongbum, San Jose, CA 95120 (US)
(74) Representative: Jehle, Volker Armin

(57) **Abstract**

Aspects of a method and system for vehicular power distribution utilizing power over Ethernet are provided. In this regard, power may be distributed via one or more Ethernet links (110,115) to one or more devices (101,103) of a vehicular electronics network, where the Ethernet links may also communicate multimedia and/or control information to and/or from the devices (101,103). Power may be distributed to devices (101,103) of the vehicular electronics network in accordance with power over Ethernet standards. At least one component in the vehicular electronics network may operate as power supplying equipment (PSE) (101). At least one component in the vehicular electronics network may operate as a powered device (PD) (103). At least one component in the vehicular electronics network may operate as a powered device (103). An amount of power distributed to one or more of the devices may be determined based on a power classification of the one or more devices.

## Description

### CROSS-REFERENCE TO RELATED APPLICATIONS/INCORPORATION BY REFERENCE

This patent application makes reference to, claims priority to and claims benefit from United States Provisional Patent Application Serial No. 61/014,349 filed on Dec 17, 2007.

The above stated provisional application is hereby incorporated herein by reference in its entirety.

### FIELD OF THE INVENTION

Certain embodiments of the invention relate to a method and system for vehicular electronics. More specifically, certain embodiments of the invention relate to a method and system for vehicular power distribution utilizing power over Ethernet.

### BACKGROUND OF THE INVENTION

From staying connected, to assisting with daily tasks, to providing entertainment, electronics are becoming an increasingly important aspect of people's daily lives. Accordingly, vehicles are increasingly being equipped with advanced electronics equipment. For example, advanced stereos and sound systems, navigation equipment, and back-up assist cameras, and an increasing number of diagnostic sensors are just some of the advanced electronics being installed in vehicles. Consequently, installation and interoperation of the various electronic devices is becoming increasingly complicated and expensive. In this regard, the wiring alone required for communicating data to and from the various electronic devices is a major source of cost and complication in a vehicle electronic network. In this regard, specialized physical media, as is conventionally utilized in the vehicular industry, may be expensive. Additionally, existing standards for vehicular networking, such as MOST and IDB-1394, are immature and largely unproven at high data rates. Additionally, non-standardized devices, connectors, and/or protocols utilized by vehicular electronics networks may further add to the cost and complexity. Thus, conventional and traditional vehicular electronics network may be expensive, complicated, and difficult to upgrade.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A system and/or method is provided for vehicular power distribution utilizing power over Ethernet, substantially as shown in and/or described in connection with at least one of the figures, as set forth more completely in the claims.
According to an aspect, a method for vehicular electronics is provided, the method comprising:
distributing power to one or more electronic devices in a vehicle via one or more Ethernet cables, wherein said Ethernet links are operable to communicate multimedia information and/or control information to and/or from said one or more electronic devices.
Advantageously, said one or more Ethernet cables comprise twisted pair cables terminated with modular connectors.
Advantageously, the method further comprises distributing said power in adherence with power over Ethernet standards.
Advantageously, the method further comprises distributing native vehicle power via said one or more Ethernet cables.
Advantageously, said one or more Ethernet cables carry power and data simultaneously.
Advantageously, at least one of said one or more electronic devices comprise a node operating as power supplying equipment.
Advantageously, said node is an endspan.
Advantageously, said node is a midspan.
Advantageously, at least one of said one or more electronic devices operates as a powered device.
Advantageously, the method further comprises distributing an amount of power to said one or more electronic devices based on a power classification of said one or more electronic devices.
Advantageously, said one or more devices comprise a plurality of Ethernet ports such that said one or more devices may be daisy-chained.
Advantageously, said one or more cables comprise one or more redundant cables operable to distribute said power to said one or more devices.
According to an aspect, a system for vehicular electronics comprises:
one or more circuits in a vehicular electronics network operable to distribute power to one or more devices of said vehicular electronics network via one or more Ethernet links, wherein said Ethernet links are operable to communicate multimedia information and/or control information to and/or from said one or more devices.
Advantageously, said one or more Ethernet links comprise twisted pair cables with modular connectors.
Advantageously, said one or more circuits are operable to distribute said power in adherence with power over Ethernet standards.
Advantageously, said one or more circuits are operable to distribute native vehicle power via said one or more Ethernet cables.
Advantageously, said one or more Ethernet cables carry power and data simultaneously.
Advantageously, at least one of said one or more devices comprise a node operating as power supplying equipment.
Advantageously, said node is an endspan.
Advantageously, said node is a midspan.
Advantageously, at least one of said one or more electronic operates as a powered device.
Advantageously, said one or more circuits are operable to distribute an amount of power to said one or more devices based on a power classification of said one or more devices.
Advantageously, said one or more devices comprise a plurality of Ethernet ports such that said one or more devices may be daisy-chained.
Advantageously, said one or more cables comprise one or more redundant cables operable to distribute said power to said one or more devices.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a diagram illustrating delivery of data and power over a vehicular Ethernet connection, in accordance with an embodiment of the invention.

FIG. 2A is a diagram of a conventional vehicular electronics network where data and/or power are delivered separately, in connection with an embodiment of the invention.

FIG. 2B is a diagram illustrating delivery of power and data via Ethernet in a vehicular electronics network, in accordance with an embodiment of the invention.

FIG. 2C is a diagram illustrating a vehicle electronics network comprising a networking device for delivering power and data over Ethernet, in accordance with an embodiment of the invention.

FIG. 2D is a diagram illustrating delivery of power and data via Ethernet in a vehicular electronics network comprising daisy-chained devices, in accordance with an embodiment of the invention.

FIG. 3A is a diagram illustrating an exemplary vehicular electronics network, in accordance with an embodiment of the invention.

FIG. 3B is a diagram illustrating another exemplary vehicular electronics network, in accordance with an embodiment of the invention.

FIG. 3C is a diagram illustrating an exemplary vehicular electronics network comprising a plurality of devices coupled in a daisy chain topology.

FIG. 4 is a diagram illustrating distribution of power in a vehicular electronics network, in accordance with an embodiment of the invention.

FIG. 5 is a flow chart illustrating powering one or more devices of a vehicular electronics network via one or more Ethernet cables, in accordance with an embodiment of the invention.

### DETAILED DESCRIPTION OF THE INVENTION

Certain embodiments of the invention may be found in a method and system for a centralized vehicular electronics network utilizing Ethernet with audio video bridging. In this regard, power may be distributed via one or more Ethernet links to one or more devices of a vehicular electronics network, where the Ethernet links may also communicate multimedia and/or control information to and/or from the devices. The Ethernet links may, for example, comprise category 5 or 5e twisted pair copper cabling with modular connectors. In some embodiments of the invention, power may be distributed to devices of the vehicular electronics network in accordance with power over Ethernet standards. In some embodiments of the invention, native power from a vehicles central power system (e.g., 12 Vdc or 42 Vdc power from an alternator and/or battery) or a separate designated power source may be distributed over one or more Ethernet cables. At least one component in the vehicular electronics network may operate as power supplying equipment (PSE). The PSE may be an endspan or a midspan. At least one component in the vehicular electronics network may operate as a powered device. An amount of power distributed to one or more of the devices may be determined based on a power classification of the one or more devices.

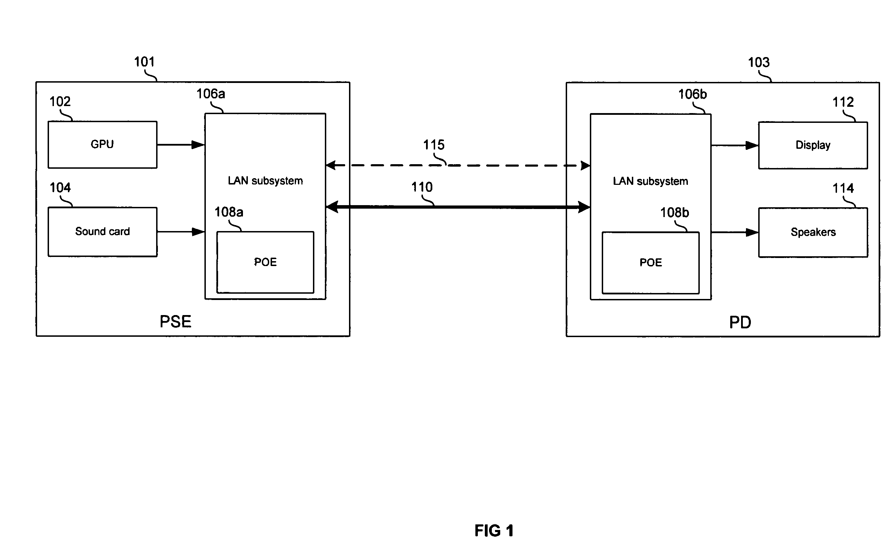

FIG. 1 is a diagram illustrating delivery of data and/or power over an Ethernet connection, in accordance with an embodiment of the invention. Referring to FIG. 1 there is shown power supplying equipment (PSE) 101, a network cable 110, a redundant network cable 115, and powered device (PD) 103. In the exemplary embodiment of the invention depicted in FIG. 1, the PSE 101 and PD 103 may be non-mission critical electronic devices. In various other embodiments of the invention, the equipment may comprise a mission critical vehicular electronic device such as a central computing system or any of a variety of diagnostic sensors or monitors. In this regard, rather than exchanging, for example, multimedia or navigation information, mission critical devices of a vehicular electronics network may exchange, for example, diagnostic and or sensor information. Guaranteed quality of service made possible utilizing AVB may enable combining mission critical and non-mission critical devices into a single vehicular network rather than having separate networks for mission critical and non-mission critical devices. Additionally, aspects of the invention may enable providing power over Ethernet links to mission-critical devices first and providing remaining or excess power to non-mission critical devices. Similarly, a certain amount of available power may be available only to mission critical devices.

The cable 110 may be a physical medium suitable for conveying data and power. In various embodiments of the invention, the cable 110 may comprise Cat-5 (or similar) cabling comprising one or more twisted pair physical channels. In this regard, the cable 110 may be a conventional Cat-5 cable comprising four twisted pairs with an 8 position 8 conductor (8P8C) plug (often referred to as RJ-45) on either end. In other embodiments of the invention, the cable 110 may comprise physical media which may not be utilized in a conventional Ethernet network but may be suitable and/or desirable for a vehicular electronic network. In this regard, Ethernet cables and/or the connectors with which they are terminated and/or to which they are coupled, may be modified, enhanced, or otherwise different from their conventional counterparts utilized in conventional Ethernet networks. For example, shielded and/or unshielded cable may be utilized, cables may be terminated in ganged connectors, and cables may comprise any number of twisted pairs. In this regard, the link may comprise a cable with fewer than 4 twisted pairs to reduce cost and/or weight. In this regard, the PSE 101 and the PD 103 may be operable to supply and/or receive power via an Ethernet link comprising a single physical channel as disclosed in United States Provisional Patent Application No. 61/082,541, filed on July 22, 2008 which is hereby incorporated herein by reference in its entirety.

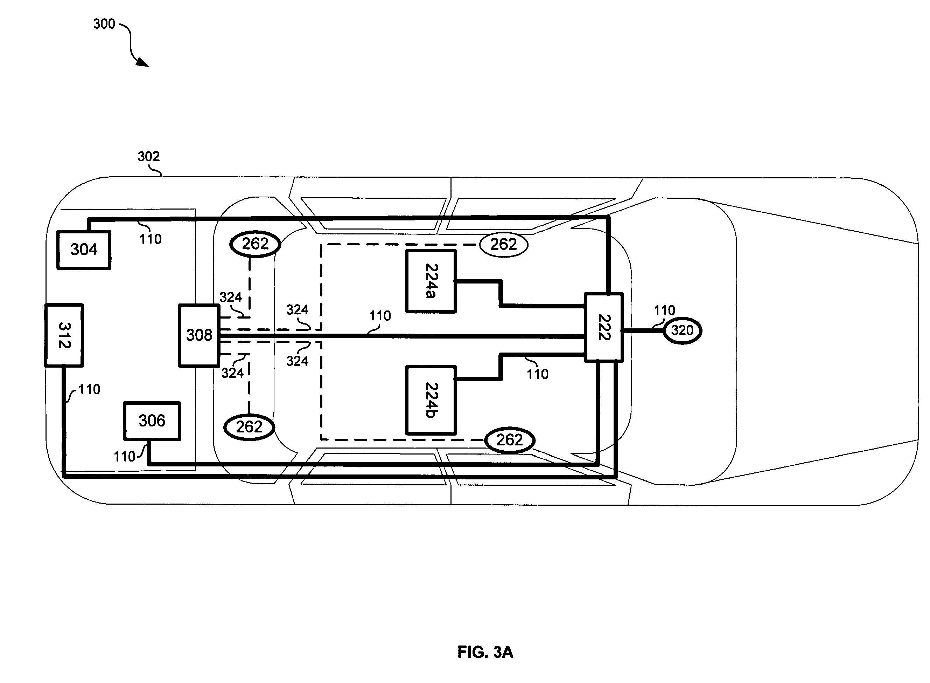

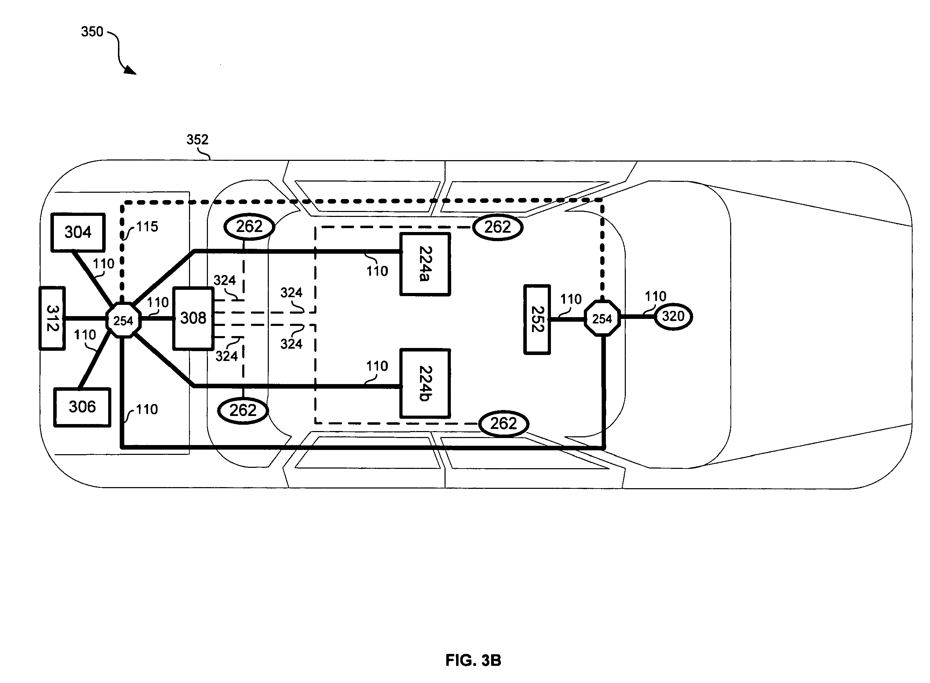

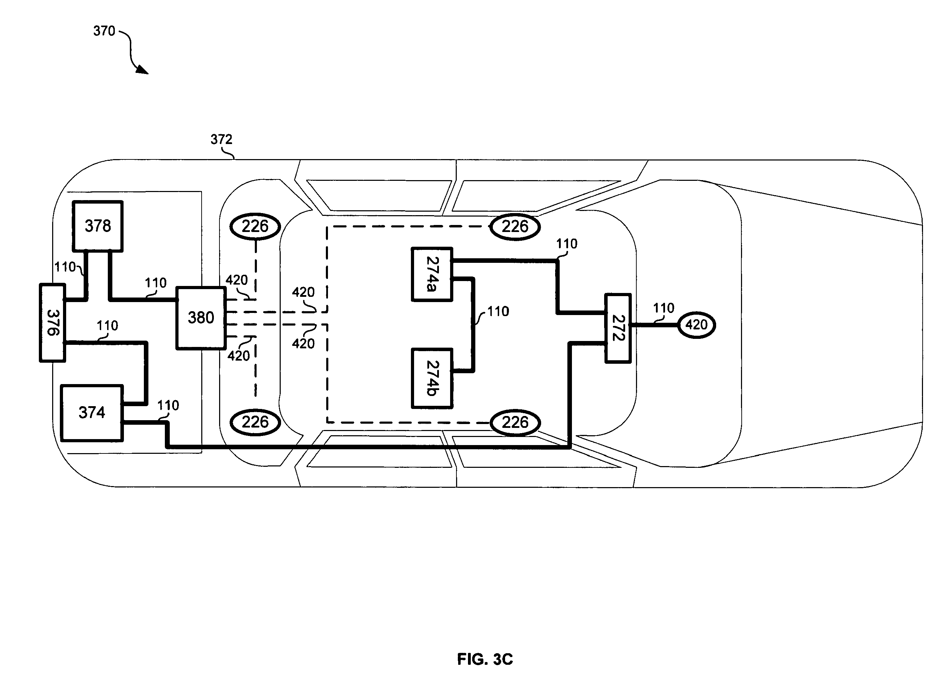

In various embodiments of the invention, one or more redundant network cables, such as the cable 115 depicted as a dashed line in FIG. 3, may additionally couple the PSE 101 and the PD 103. In various embodiments of the invention, loops in the network may be normally blocked as a result of a spanning tree algorithm but may be utilized in the event of a network failure. Alternatively, redundant paths may be utilized to increase throughput between two or more devices in a network.

The PSE 101 may comprise a graphics processing unit (GPU) 102, a sound card 104, and a local area networking (LAN) subsystem 106a. The PSE 101 may be enabled to transmit data, including but not limited to high definition multimedia streams, over the network cable(s) 110 and/or 115 and/or supply power to the PD 103 over the cable(s) 110 and/or 115. The GPU 102 may comprise suitable logic, circuitry, and/or code that may enable generating graphics and/or video data. In this regard, resolution, encoding, format, compression, data rates, and/or other characteristics of video and/or graphics out of the GPU 102 may vary without deviating from the scope of the invention. For example, high definition video of 720p, 1080i, 1080p, or even higher resolution may be supported and output by the GPU 102. The sound card 104 may comprise suitable logic, circuitry, and/or code that may enable generating audio data. In this regard, resolution, encoding, format, compression, data rates, and/or other characteristics of an audio stream out of the sound card 104 may vary without deviating from the scope of the invention. For example, audio sample at 44.1 kHz, 96 kHz, 192 kHz or even higher may be supported and output by the sound card 104.

The PD 103 may comprise a LAN subsystem 106b, a display 112, and one or more speakers 114. The PD 103 may be enabled to receive data, including but not limited to high definition multimedia streams, via the network cable(s) 110 and/or 115 and/or be powered by a supply voltage and/or current received via the cable(s) 110 and/or 115. The display 112 may be enabled to present video and/or graphics to a user. In various embodiments of the invention, data passed to the display 112 from the LAN subsystem 106b may be raw graphics and/or video or may be formatted according to one or more standards such as HDMI or DisplayPort. The speaker(s) 114 may be enabled to present audio to a user. In various embodiments of the invention, data passed to the speaker(s) 114 from the LAN subsystem 106b may be raw audio or may be formatted according to one or more standards such as Mp3 or AAC.

The LAN subsystems 106a and 106b may each comprise suitable logic, circuitry, and/or code that may enable transmitting and/or receiving data over a network. The LAN subsystems 106a and 106b may each be enabled to utilize AVB. The LAN subsystems 106a and 106b may each utilize Ethernet protocols for transmitting and/or receiving data via the network cable(s) 110 and/or 115. In this regard, the LAN subsystems 106a and 106b may each comprise a medium access control (MAC) module and a PHY. In various embodiments of the invention, the LAN subsystems 106a and 106b may each support a variety of data rates such as 10 Mbps, 100 Mbps, 1000 Mbps (or 1 Gbps), 2.5Gbps, 4Gbps, 10 Gbps, or 40Gbps, for example. In this regard, the LAN subsystems 106a and 106b may each support standard-based data rates and/or non-standard data rates. Additionally, the LAN subsystems 106a and 106b may each be enabled to format, encode, packetize, compress, decompress, encrypt, decrypt, or otherwise process multimedia data. The LAN subsystems 106a and 106b may comprise power over Ethernet (PoE) blocks 108a and 108b, respectively. Additionally, the LAN subsystems 106a and 106b may each be operable to perform a diagnostic of the cable 110. In this manner, network problems such as open and shorted links may be detected and the quality of an Ethernet link may be determined.

The PoE block 108a may comprise suitable logic, circuitry, and/or code that may enable supplying power to the PD 103 via the cable(s) 110 and/or 115 and for controlling an amount of power supplied to the PD 103 via the cable(s) 110 and/or 115. In some embodiments of the invention, the PoE 108a may adhere to power over Ethernet standards IEEE 802.3af and/or IEEE 802.3at. In some embodiments of the invention, native vehicle power may be distributed over one or more Ethernet cables. In this regard, in some embodiments of the invention, power may not be as established in IEEE 802.3 standards. For example, American passenger vehicles typically have a native 12 Vdc power system generated by one or more batteries and/or alternators. Accordingly, one or more of the Ethernet cables 110 and/or 115 may distribute the 12 Vdc to one or more devices of the vehicle. The PoE block 108a may be enabled to manage a voltage and/or current supplied to the PD 103 in order to improve energy efficiency. In this regard, the PoE block 108a may receive one or more control signals from other devices of the LAN subsystem 106a. In various embodiments of the invention, the PoE blocks 108a and 18b may be compatible with legacy PoE systems and/or may be enhanced and/or modified to meet needs and/or desires of a vehicular automotive network.

The PoE block 108b may comprise suitable logic, circuitry, and/or code for receiving power via the cable(s) 110 and/or 115. In various embodiments of the invention, the PoE 108a may adhere to power over Ethernet standards IEEE 802.3af and/or IEEE 802.3at. In this regard, the POE block 108b may be enabled to receive power via the cable(s) 110 and/or 115 and distribute, regulate, or otherwise manage the received power. In this manner, at least a portion of the LAN subsystem 106b, the display 112, and/or the speaker(s) 114 may operate using power received via the cable(s) 110 and/or 115. In various embodiments of the invention, the PoE block 108b may be enabled to indicate a power required from the PSE 101. For example, the PoE block 108b may comprise a variable sense resistor. In this regard, the PoE block 108a may receive one or more control signals from other devices of the LAN subsystem 106b.

In operation, the GPU 102 may generate video and/or graphics and may transfer the video or graphics to the LAN subsystem 106a for additional processing and/or formatting according to one or more networking standards. In one embodiment of the invention, the GPU 102 may output raw video/graphics to the LAN subsystem 106a. In another embodiment of the invention, the GPU 102 may output formatted video and/or graphics, DisplayPort or HDMI, for example, to the LAN subsystem 106a. The LAN subsystem 106a may encapsulate multimedia data into Ethernet frames and transmit the frames onto the cable(s) 110 and/or 115. The LAN subsystem 106b may receive multimedia data over the network cable(s) 110 and/or 115. The LAN subsystem 106b may de-packetize, parse, format, and/or otherwise process the received data and may convey received video data to the display 112 and may convey received audio data to the speaker(s) 114.

In some embodiments of the invention, the POE block 108a may be enabled to determine a power class of the PD 103 based on a sense resistance in the POE block 108b. Accordingly, aspects of the invention may enable dynamically altering the sense resistance in the PoE block 108b to improve energy efficiency. In other embodiments of the invention, the POE block 108a may utilize power classification techniques similar to or the same as those being developed by the IEEE 802.3at task force. In this regard, 2-Event classification and/or Layer 2 Classification may be supported by the POE blocks 108a and/or 108b,

In this manner, a power class may be determined based on the type of PD communicatively coupled to the cable(s) 110 and/or 115. For example, an audio amplifier may require more power than a digital media player. Additionally, the power class may be dynamically configured for a given PD 103. For example, a lower power class may be selected by a display when the display is processing and/or presenting low resolution video, whereas a higher power class may be selected when the display is processing high definition.

In various embodiments of the invention, data communicated over the link 110 may be secured utilizing one or more protocols such as and/or IEEE 802.1ae (MACSec) and/or related protocols such as IEEE 802.1af and IEEE 802.1ar. In this regard, security protocols may be of particular importance for mission-critical devices.

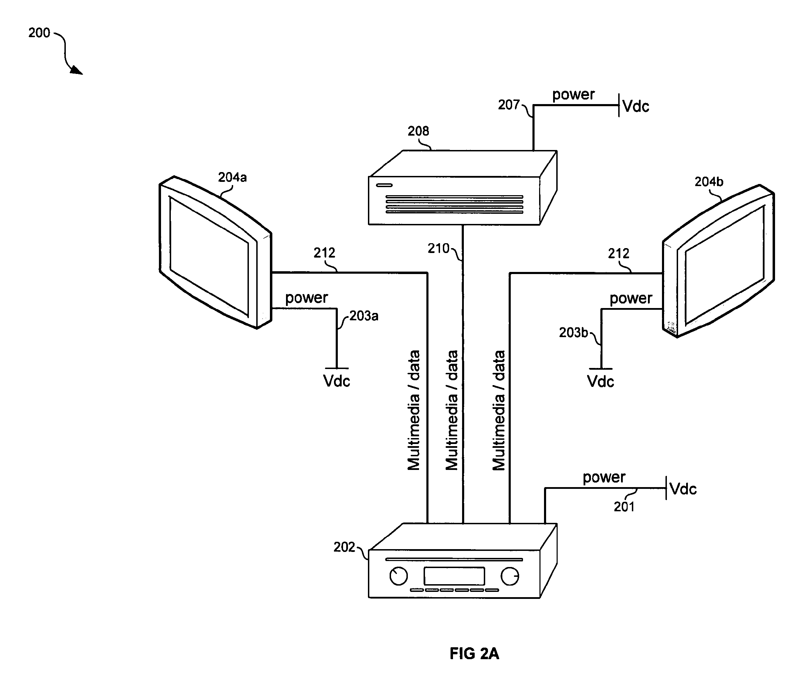

FIG. 2A is a diagram of a conventional vehicular electronics network where data and/or power are delivered separately, in connection with an embodiment of the invention. Referring to FIG. 2A the conventional vehicular electronics network 200 may comprise entertainment and/or navigation equipment 202, displays 204, and computing and/or entertainment device 208. The entertainment and/or navigation equipment 202 may be communicatively coupled to the displays 204 via links 212 and to the computing and/or entertainment device 208 via the link 210. In this regard, communicatively coupling different types of vehicular electronic devices may require different cables and/or connectors. Additionally, each of the devices of the vehicular electronics network 200 may be powered via power connections 201, 203a, 203b, and 207, respectively.

The entertainment and/or navigation equipment 202 may comprise suitable logic, circuitry, and/or code that may enable delivering and/or receiving data to/from the various other devices of the vehicular electronics network 200. In this regard, entertainment and/or navigation equipment 202 may, for example, operate as a user interface and/or central processing unit for controlling entertainment, navigation, and/or other electronic devices of the vehicular electronics network 200. Different entertainment and/or navigation equipment 202 may comprise different and/or proprietary connectors and/or interfaces which may increase the complexity and/or cost of installing the equipment 202 into new or existing vehicular electronics networks. Similarly, different and/or proprietary connectors and/or interfaces on the equipment 202 may limit compatibility of the equipment 202 with other vehicular electronic devices.

The displays 204 may comprise suitable logic, circuitry, and/or code that may enable, for example, rendering and/or presenting audio and/or video received from the entertainment and/or navigation equipment 202. Additionally, in some instances, the displays 204 may comprise, for example, a touch screen and may enable controlling and/or providing input to the entertainment and/or navigation equipment 202. Different displays 204 may comprise different and/or proprietary connectors and/or interfaces which may increase the complexity and/or cost of installing the displays 204 into new or existing vehicular electronics networks. Similarly, different and/or proprietary connectors and/or interfaces on the displays 204 may limit compatibility of the displays 204 with other vehicular electronic devices.

The computing and/or entertainment device 208 may comprise suitable logic, circuitry, and/or code that may enable processing electronic information. In this regard, the computing and/or entertainment device 208 may represent a variety of miscellaneous electronic equipment which may be found in a vehicular electronics network. For example, the computing and/or entertainment device 208 may comprise an optical drive, a hard-drive, solid-state storage, one or more sensors, audio equipment, etc. Different computing and/or entertainment devices 208 may comprise different and/or proprietary connectors and/or interfaces which may increase the complexity and/or cost of installing the computing and/or entertainment devices 208 into new or existing vehicular electronics networks. Similarly, different and/or proprietary connectors and/or interfaces on the computing and/or entertainment device 208 may limit compatibility of the computing and/or entertainment device 208 with other vehicular electronic devices.

In operation, each of the devices of the vehicular electronics network 200 may be powered via a dedicated and possibly different power connector and/or interface. In this regard, each component of the vehicular electronics network 200 may require a pair of wires connected to, for example, a 12Vdc vehicular power source. Accordingly, power cables 201, 203a, 203b, and 207 may result in a large and/or complicated wiring scheme. Moreover, because a conventional vehicle may comprise only a 12Vdc power source, each component of the vehicular electronics network 200 may comprise power conditioning circuitry to adapt the 12Vdc to meet that component's power needs. This need for each component of the vehicular electronics network 200 to regulate its own power supply may lead to increased cost and/or complexity of each of the devices 202, 204a, 204b, and 208.

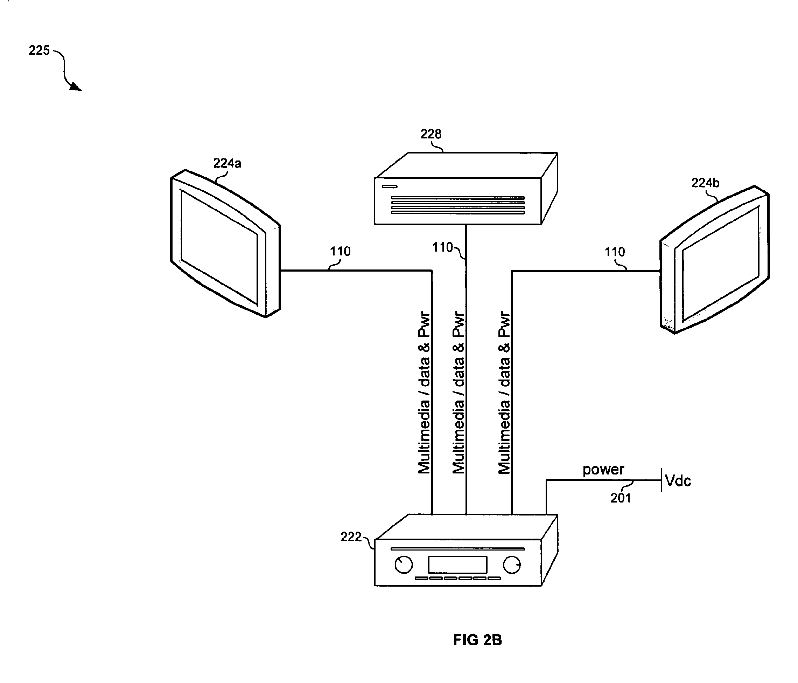

FIG. 2B is a diagram illustrating delivery of power and data via Ethernet in a vehicular electronics network, in accordance with an embodiment of the invention. Referring to FIG. 2B, the vehicular electronics network 225 may comprise entertainment and/or navigation equipment 222, displays 224, and computing and/or entertainment device 228. Various embodiments of the invention may comprise additional, different, and/or fewer electronic devices without deviating from the scope of the invention.

The entertainment and/or navigation equipment 222 may differ from the conventional entertainment and/or navigation equipment 202 described with respect to FIG. 2A in that the entertainment and/or navigation equipment 222 may be enabled to supply power to devices to which it is communicatively coupled. In this regard, the entertainment and/or navigation equipment 222 may supply power to and exchange data, including but not limited to HD multimedia streams, with each of a variety of automotive electronics devices via one or more Ethernet cables 110 and/or possibly one or more redundant cables 115 (not shown). In this regard, the entertainment and/or navigation equipment 222 may be power supplying equipment (PSE) and may condition voltage and/or currents received via the connection 201 prior to distributing power over the cables 110. The entertainment and/or navigation equipment 222 may deliver power over the cables 110 utilizing power over Ethernet (PoE) standards. The entertainment and/or navigation equipment 222 may also differ from the conventional entertainment and/or navigation equipment 202 described with respect to FIG. 2A in that it may be enabled to communicate in accordance with Ethernet standards and may additionally utilize Audio Video Bridging and/or extensions thereto (collectively referred to herein as AVB) for transmission and/or reception of multimedia and/or time sensitive data. Thus, data and power may be conveyed over each of the cables 110.

The displays 224 may differ from the displays 204 described with respect to FIG. 2A in that the displays 224 may receive power and exchange data via cables 110. In this regard, the displays 224 may each be a powered device (PD) similar to or the same as the PD 103 described with respect to FIG. 1. The displays 224 may be enabled to communicate in accordance with Ethernet standards and may additionally utilize Audio Video Bridging and/or extensions thereto (collectively referred to herein as AVB) for transmission and/or reception of multimedia and/or time sensitive data.

The computing and/or entertainment device 228 may differ from the conventional computing and/or entertainment device 208 described with respect to FIG. 2A in that the computing and/or entertainment device 228 may receive power and exchange data via a cable 110. In this regard, the computing and/or entertainment device 228 may be a powered device (PD) similar to or the same as the PD 103 described with respect to FIG. 1. The computing and/or entertainment device 228 may be enabled to communicate in accordance with Ethernet standards and may additionally utilize Audio Video Bridging and/or extensions thereto (collectively referred to herein as AVB) for transmission and/or reception of multimedia and/or time sensitive data. Additionally and/or alternatively, the computing device 228 may be operable to collect information from one or more sensors and communicate that information over an Ethernet cable 110. In this regard, data or information from sensors may be displayed visually or aurally to a driver or passenger via the network 225. Additionally, data collected by the computing device 228 may be utilized to control various portions of the vehicular electronics network 225 and/or various functions of the vehicle.

In operation, the entertainment and/or navigation equipment 222 may apply a DC voltage and/or current to one or more twisted pairs of each of the cables 110. In this manner, the equipment 222 may supply power to the displays 224 and/or the equipment 228. In various embodiments of the invention, the entertainment and/or navigation equipment 222 may be enabled to classify power requirements of each of the displays 224 and/or the computing and/or entertainment device 228 and provide corresponding power to the various devices. For example, each of the displays 224 and the computing and/or entertainment device 228 may comprise a sense resistance which may indicate a power class.

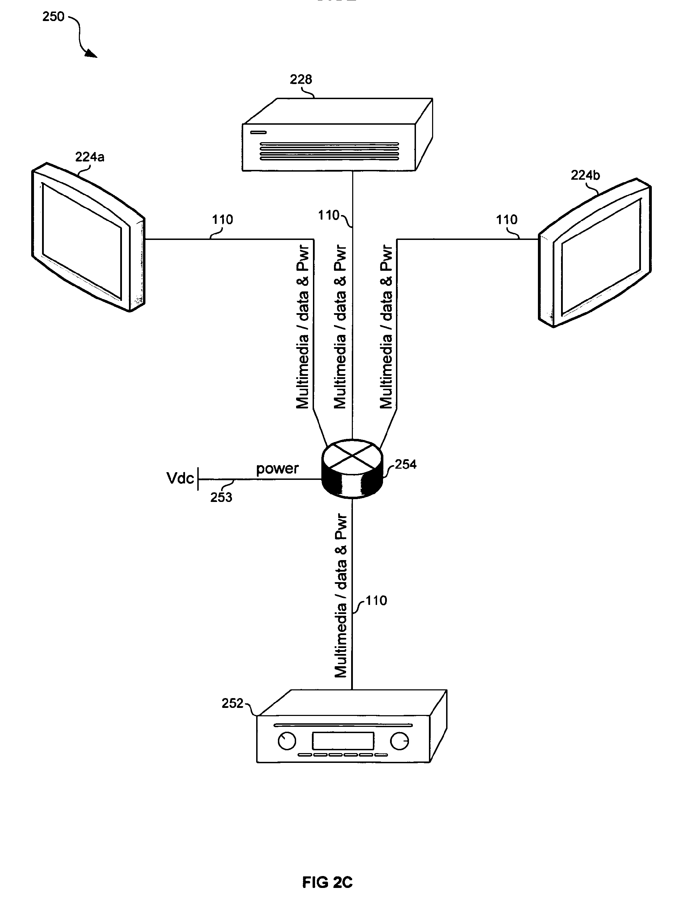

FIG. 2C is a diagram illustrating a vehicle electronics network comprising a networking device for delivering power and data over Ethernet, in accordance with an embodiment of the invention. Referring to FIG. 2C, there is shown a vehicular electronics network 250 similar to the vehicular electronics network 250 of FIG. 2B, but additionally comprising a networking device 254 coupled to a power source via a power cable 253. Various embodiments of the invention may comprise additional, different, and/or fewer electronic devices without deviating from the scope of the invention.

The entertainment and/or navigation equipment 252 may differ from the entertainment and/or navigation equipment 222 described with respect to FIG. 2B in that the entertainment and/or navigation equipment 252 may be powered device similar to the PD 103 of FIG. 1.

The networking device 254 may comprise suitable logic, circuitry, and/or code for distributing power utilizing PoE. In this regard, the networking device 254 may receive power via the connection 253 from, for example, a 12Vdc vehicle power source. The networking device 254 may regulate or otherwise condition the power for distribution to various other devices of the vehicular electronics network 250. In this manner, the networking device 254 may operate as a power hub that may enable powering various devices in a vehicle via an inexpensive, standardized, and ubiquitous Ethernet connection. Additionally, the networking device 254 and may provide additional power ports for updating and/or reconfiguring the vehicular electronics network 250. Thus, the networking device 254 may simplify the installation and wiring of the vehicular electronics network 250. The networking device 254 may also comprise suitable logic, circuitry, and/or code that may enable communicating data in accordance with Ethernet standards and may additionally utilize Audio Video Bridging (AVB) and/or AVB extensions (collectively referred to herein as AVB or Audio Video Bridging) for the communication of data, including but not limited to high definition multimedia streams and/or time sensitive data. In this manner, the networking device 254 may operate as a network switch, bridge, router, etc. for data communications in the vehicular electronics network 250. In various embodiments of the invention, the networking device 254 may be operable to perform higher layer (e.g., layer 3 and/or layer for of the OSI model) functions or protocols which may utilize, or run on top of, layer 2 Audio Video Bridging protocols. In various embodiments of the invention, the networking device 254 may be a midspan which may inject power onto one or more conductors of one or more cables 110 without affecting the data. In various embodiments of the invention, the networking device 254 may be an endspan that may, for example, process and/or operate on data in addition to injecting power onto one or more conductors of one or more cables 110.

In operation, the networking device 254 may classify the power needs of the entertainment and/or navigation equipment 222, the displays 224, and the entertainment and/or computing device 228, and may deliver a corresponding power to each of the devices. With regard to the entertainment and/or navigation equipment 222, power needs may, for example, depend on whether none, one, or both of navigation and entertainment functions are being utilized. With regard to the displays 224, power needs may depend on the source and type of video being displayed. With regard to the entertainment and/or computing device 228, power needs may depend on a type, amount, and/or rate of information being processed and/or generated. For power classification, each of the equipment 222, the displays 224, and the entertainment and/or computing device 228 may comprise, for example, a sense resistance that may be detected by the networking device 254. Additionally, and/or alternatively, power allocated to various device of the network 250 may depend on whether or not a device performs mission-critical functions. In various embodiments of the invention, the networking device 254 may regulate and/or condition the power distributed to each of the devices of the vehicular electronics network 250 and thus the entertainment and/or navigation equipment 222, the displays 224, and the entertainment and/or computing device 228 may not need additional power conditioning circuitry. In this manner, the networking device 254 may perform most or all of the power conditioning for the vehicular electronics network 250 and may thus reduce cost and/or complexity of the other devices of the vehicular electronics network 250.

Additionally, the networking device 254 may route data, encapsulated in Ethernet packets, between the electronic devices the various devices of the vehicular electronics network 250. In various embodiments of the invention, AVB may be utilized to ensure quality of service for the communicated data. Furthermore, connecting and disconnecting equipment to the vehicular electronics network 250 may be, for example, "plug and play" similar to or the same as a computer connecting to a conventional local area network. In this regard, an occupant of the vehicle may connect a portable or external electronic device to the vehicular electronics network 250. For example, an occupant of the vehicle may connect a laptop comprising a standard Ethernet port to the vehicular electronics network 250. In this manner, the laptop may be charged utilizing power received from the vehicular electronics network and/or data may be exchanged between the laptop and the vehicular electronics network.

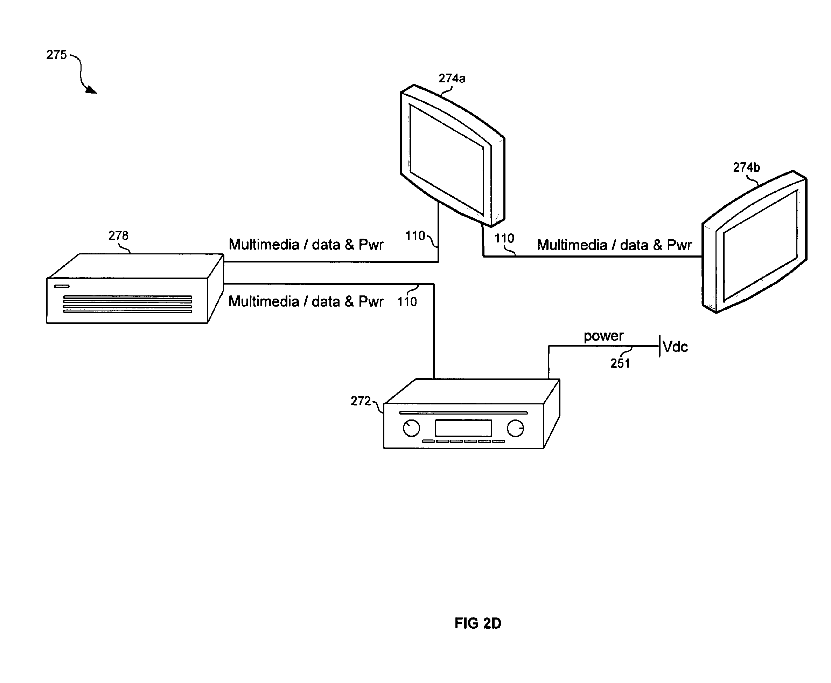

FIG. 2D is a diagram illustrating delivery of power and data via Ethernet in a vehicular electronics network comprising daisy-chained devices, in accordance with an embodiment of the invention. Referring to FIG. 2D, there is shown a vehicular electronics network 275 similar to the vehicular electronics network 225 of FIG. 2B, but rather than the star topology of network 225, the devices of the network 275 may be communicatively coupled in a daisy-chain topology. The vehicular electronics network 275 may comprise entertainment and/or navigation equipment 272, computing and/or entertainment equipment 278, and displays 274. Various embodiments of the invention may comprise additional, different, and/or fewer electronic devices without deviating from the scope of the invention. Additionally, one or more redundant links for providing fail over operation or for increasing throughput, similar to the link 115 of FIG. 1, may be present in a vehicular electronics network utilizing any combination of star-coupled and daisy-chained devices.

The various devices of the network 275 may be similar to the devices of the network 225 but each device may comprise one or more additional network ports and associated circuitry, logic, and/or code. Accordingly, one or more of the devices of the network 275 may be operable to forward packets and route power between its two or more ports. In this manner, data exchanged between, for example, the entertainment and/or navigation equipment 272 and the displays 274 may be routed via the computing and/or entertainment device 278. Similarly, power delivered from the entertainment and/or navigation equipment 272 may pass through the computing and/or entertainment device 278 en route to the displays 274.

FIG. 3A is a diagram illustrating an exemplary vehicular electronics network, in accordance with an embodiment of the invention. Referring to FIG. 3A, the vehicle 302 may comprise a vehicular electronics network 300 similar to the vehicular electronics network 225 described with respect to FIG. 2B. In this regard, the embodiment depicted in FIG. 3A may depict an exemplary vehicular electronics network 300 communicatively coupled in a star topology via Ethernet cables 110. The vehicular electronics network 300 may comprise entertainment and/or NAV equipment 222, displays 224, speakers 262, entertainment equipment 304, computing device 306, and back-up assist camera 312. Various other embodiments of the invention may comprise additional, different, and/or fewer electronic devices without deviating from the scope of the invention.

The entertainment and/or navigation equipment 222 and the displays 224 may be as described with respect to FIG. 2B.

The computing device 306 may be similar to or the same as the computing and/or entertainment equipment 228 described with respect to FIG.2B. In various embodiments of the invention, the computing device 306 comprise suitable logic, circuitry, and/or code for collecting information from one or more sensors and communicating that information over an Ethernet cable 110. In this regard, data or information from sensors may be displayed visually or aurally to a driver or passenger via the network 300. Additionally, data collected by the computing device 306 may be utilized to control various portions of the vehicular electronics network 300 and/or various functions of the vehicle.

The speakers 262 may comprise suitable logic, circuitry, and/or code for converting audio data to acoustic waves. In some embodiments of the invention, analog audio signal may be conveyed to the speakers 262 via conventional speaker wire or via twisted pairs in a Cat-5 (or similar) cable. In some embodiments of the invention, audio data encapsulated in one or more Ethernet frames may be conveyed to the speakers 262 and the speakers 262 may be operable to convert the digital audio data to analog audio before converting the analog audio to acoustic waves.

The audio equipment 308 may comprise suitable logic, circuitry, and/or code that may enable it to be powered via an Ethernet cable 110 and also to extract audio from Ethernet frames and generate corresponding analog audio signals to be conveyed via the links 324. For example, the audio equipment may be an amplifier and/or cross-over. In various embodiments of the invention, the cables 324 may comprise conventional speaker wire or may comprise cabling typically found in Ethernet networks, such as Cat-5 cabling. In other embodiments of the invention, the audio equipment 308 may digitally process the audio and re-encapsulate the audio data into Ethernet frames prior for communication to the speakers 262.

The back-up assist camera 312 may comprise suitable logic, circuitry, and/or code that that may enable it to be powered via an Ethernet cable 110 and also to capture images and convey those images to a display. In this regard, back-up assist camera 312 may encapsulate the captured image data into Ethernet frames and convey them, utilizing AVB, to the entertainment and/or navigation equipment 222 for viewing by the driver of the vehicle.

The microphone 320 may comprise suitable logic, circuitry, and/or code that may enable it to be powered via an Ethernet cable 110 and also to convert acoustic waves into digital audio data. Audio from the microphone 320 may enable a user (driver or passenger) to control various functions of the vehicular electronics network 300 via voice commands. Additionally, the microphone 320 may enable interaction, via Bluetooth or Wi-Fi for example, with a cell phone or other portable electronic device via the vehicular electronics network 300.

The entertainment equipment 304 may be similar to or the same as the computing and/or entertainment equipment 228 described with respect to FIG.2B. In various embodiments of the invention, the entertainment equipment 304 may encapsulate audio and/or video into Ethernet frames and communicate the frames utilizing AVB to various portions of the network 300. In this regard, the multimedia may, for example, be played back from an optical disc or digital storage medium. In some embodiments of the invention, entertainment equipment 304 may be a video game console. Control information may be communicated, possibly utilizing AVB, to the entertainment equipment 304 from one or more other devices of the network 300. In this regard, the entertainment equipment 304 may be controlled to, for example, select a desired disc, track, or file to be played back.

FIG. 3B is a diagram illustrating an exemplary vehicular electronics network, in accordance with an embodiment of the invention. Referring to FIG. 3B, the vehicle 352 may comprise a vehicular electronics network 350 similar to the vehicular electronics network 250 described with respect to FIG. 2C. In this regard, FIG. 3B may depict an exemplary vehicular electronics network 350 communicatively coupled in a star topology via Ethernet links 110 and nodes 254. Various other embodiments of the invention may comprise additional, different, and/or fewer electronic devices without deviating from the scope of the invention.

In various embodiments of the invention, one or more redundant network links, such as the cable 115 depicted as a dashed line in FIG. 3B, may be present in the vehicular electronics network. In various embodiments of the invention, loops in the network may be normally blocked as a result of a spanning tree algorithm but may be utilized in the event of a network failure. Alternatively, redundant paths may be utilized to increase throughput between two or more nodes in a network.

FIG. 3C is a diagram illustrating an exemplary vehicular electronics network, in accordance with an embodiment of the invention. Referring to FIG. 3C, the vehicle 372 may comprise a vehicular electronics network 370 similar to the vehicular electronics network 275 described with respect to FIG. 2D. In this regard, FIG. 3C may depict an exemplary vehicular electronics network 370 communicatively coupled in a daisy-chained topology via Ethernet cables 110. The vehicular electronics network 370 may comprise entertainment and/or navigation equipment 272, displays 274, speakers 226, computing device 374, back-up assist camera 376, entertainment equipment 378, and audio equipment 380. Various other embodiments of the invention may comprise additional, different, and/or fewer electronic devices without deviating from the scope of the invention.

The various devices of the network 370 may be similar to the corresponding devices of the network 350 but each device may comprise one or more additional network ports and associated circuitry, logic, and/or code. Accordingly, one or more of the devices of the network 370 may be operable to forward packets and route power between its two or more ports. In this manner, data exchanged between, for example, the entertainment and/or navigation equipment 272 and the displays 274 may be routed via the computing device 374. Similarly, power delivered from the entertainment and/or navigation equipment 272 may pass through the computing device 374 en route to the displays 274.

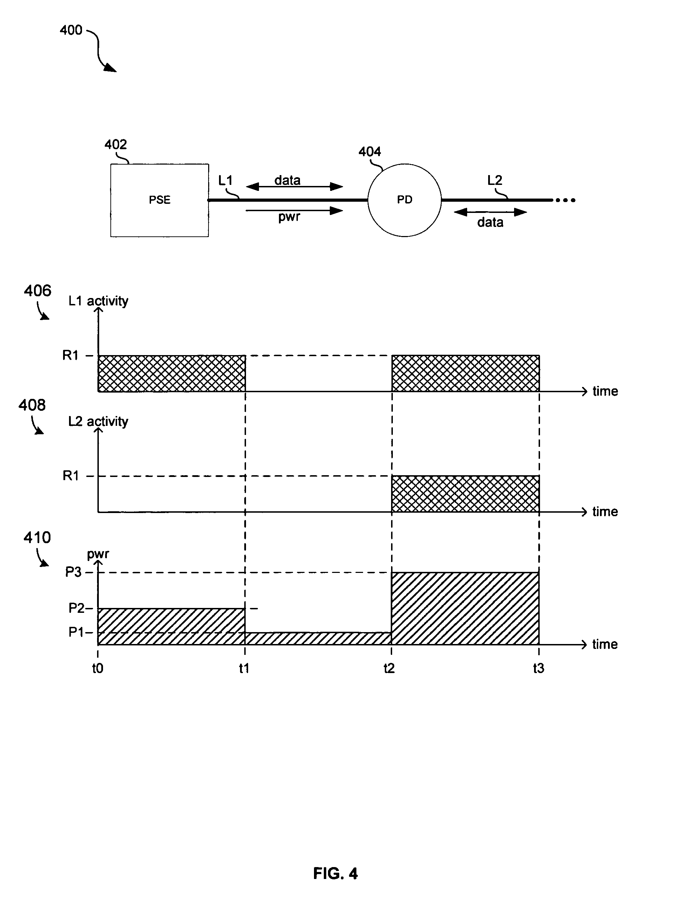

FIG. 4 is a diagram illustrating distribution of power in a vehicular electronics network, in accordance with an embodiment of the invention. Referring to FIG. 4 there is shown a PSE 402 and a PD 404 of a vehicular electronics network 400 and also graphs 406, 408, and 410 depicting an exemplary operation of the vehicular electronics network 400. The PSE 402 may be similar to or the same as the networking device 254 described with respect to FIGS. 2C and 3B. The PD 404 may be similar to or the same as, for example, the devices 320, 252, 224, 308, 304, 306, 308, and/or 312 described with respect to FIG. 3B. The PD 404 may communicate with the PSE 402 and with another electronic component (not shown) via the links L1 and L2, respectively.

During time interval t0 to t1, as depicted in graphs 406 and 408, the PD 404 may communicate data at a rate of R1 over the link L1 and the link L2 may be idle. Thus, the aggregate throughput of the PD 404 may be equal to R1. Accordingly, as depicted in the graph 410, an amount of power, P2, sufficient for the PD 404 to communicate at a rate of R1 may be provided to the PD 404 over the Ethernet link L1.

During time interval t1 to t2, both links L1 and L2 may be idle. Thus, the aggregate throughput of the PD 404 may be 0. Accordingly, only a minimal, or standby, amount of power, P1, may be provided to the PD 404 over the Ethernet link L1.

During time interval t2 to t3, as depicted in graphs 406 and 408, the PD 404 may communicate data at a rate of R1 over each of the links L1 and L2. Thus, the aggregate throughput of the PD 404 may be equal to 2*R1. Accordingly, an amount of power, P3, sufficient for the PD 404 to communicate at a rate of 2*R1 may be provided to the PD 404 over the Ethernet link L1.

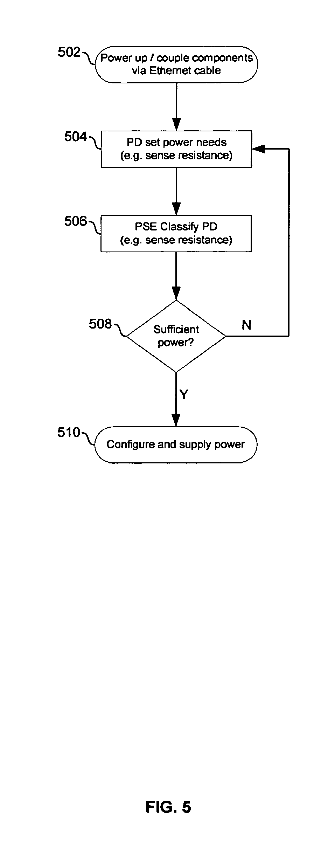

FIG. 5 is a flow chart illustrating powering one or more devices of a vehicular electronics network via one or more Ethernet cables, in accordance with an embodiment of the invention. Referring to FIG. 5, the exemplary steps may being with step 502 when two or more devices of a vehicular electronics network may be communicatively coupled via one or more Ethernet cables and powered up, wherein at least one of the devices operates as a PSE and at least one of the devices operates as a PD. Subsequent to step 502, the exemplary steps may advance to step 504. In step 504, the PD may determine its power requirements and set a power indicator, such as a sense resistance, accordingly. Subsequent to step 504, the exemplary steps may advance to step 506. In step 506, the PSE may detect a status and/or configuration of the PD's power indicator. Subsequent to step 506, the exemplary steps may advance to step 508. In step 508, it may be determined whether the PSE may be capable of meeting the power needs of the PD. In instances that the PSE may meet the demands of the PD, without sacrificing power needs of other more important devices (e.g., mission critical devices), for example, the exemplary steps may advance to step 510. In step 510, the PSE may be configured to supply to the amount of power requested by the PD via the PD's power indicator. Returning to step 508, in instances that the PSE may be unable to meet the power needs of the PD, the exemplary steps may return to step 504 and the PD may establish lower power requirements. In this regard, the PD may, for example, reduce the rate at which it may process data such that its power needs are reduced.

Exemplary aspects of a method and system for vehicular power distribution utilizing power over Ethernet are provided. In various embodiments of the invention, power may be distributed via one or more Ethernet cables 110 and or redundant cables 115 to one or more devices of a vehicular electronics network, such as devices 222, 224, 228, 254, 252, 258, 320, 262, 308, 260, 312, 304, 374, 376, 378, and 380 of the vehicular electronics networks 225, 250, 275, 300, 350, and 370 wherein the Ethernet cables 110 may also communicate multimedia and/or control information to and/or from the devices. The Ethernet cables 110 may, for example, comprise category 5 or 5e twisted pair copper cabling with modular connectors. Power may be distributed to devices of the vehicular electronics network in accordance with power over Ethernet standards. At least one component in a vehicular electronics network may operate as power supplying equipment (PSE), such as the component 222. The PSE may be an endspan or a midspan. At least one component in a vehicular electronics network may operate as a powered device, such as the devices 224 and 228. An amount of power distributed to one or more of the devices may be determined based on a power classification of the one or more devices. Additionally, devices such as 258 and 254 may comprise a plurality of Ethernet ports and may be operable to route power and/or data between the ports.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein for vehicular power distribution utilizing power over Ethernet.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for vehicular electronics, the method comprising:
distributing power to one or more electronic devices in a vehicle via one or more Ethernet cables, wherein said Ethernet links are operable to communicate multimedia information and/or control information to and/or from said one or more electronic devices.

2. The method according to claim 1, wherein said one or more Ethernet cables comprise twisted pair cables terminated with modular connectors.

3. The method according to claim 1, comprising distributing said power in adherence with power over Ethernet standards.

4. The method according to claim 1, comprising distributing native vehicle power via said one or more Ethernet cables.

5. The method according to claim 1, wherein said one or more Ethernet cables carry power and data simultaneously.

6. The method according to claim 1, wherein at least one of said one or more electronic devices comprise a node operating as power supplying equipment.

7. The method according to claim 6, wherein said node is an endspan.

8. A system for vehicular electronics, the system comprising:
one or more circuits in a vehicular electronics network operable to distribute power to one or more devices of said vehicular electronics network via one or more Ethernet links, wherein said Ethernet links are operable to communicate multimedia information and/or control information to and/or from said one or more devices.

9. The system according to claim 8, wherein said one or more Ethernet links comprise twisted pair cables with modular connectors.

10. The system according to claim 8, wherein said one or more circuits are operable to distribute said power in adherence with power over Ethernet standards.
